(19) Europäisches Patentamt
European Patent Office
Office européen des brevets

(11) Veröffentlichungsnummer: **0 308 803**
**A2**

# (12) EUROPÄISCHE PATENTANMELDUNG

(21) Anmeldenummer: **88115059.3**

(22) Anmeldetag: **15.09.88**

(51) Int. Cl.4: **C08L 71/00 , C08L 101/00 , C08K 5/49 , C08G 65/40**

(30) Priorität: **19.09.87 DE 3731607**

(43) Veröffentlichungstag der Anmeldung:
**29.03.89 Patentblatt 89/13**

(84) Benannte Vertragsstaaten:
**AT BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Reske, Eckart, Dr.**
**Richard-Wagner-Strasse 67**
**D-6239 Kriftel(DE)**
Erfinder: **Schneller, Arnold, Dr.**
**Asternweg 41**
**D-6500 Mainz 21(DE)**

## (54) Stabilisierte, aromatische Polyetherketone enthaltende Mischung und deren Verwendung zur Herstellung von Formteilen.

(57) Thermoplastische Mischungen bestehend aus mindestens einem aromatischen Polyetherketon, mindestens einer Phosphorverbindung und gegebenenfalls mindestens einem weiteren Polymerisat aus der Gruppe der Polycarbonate, Polyester, Acrylnitril/Butadien/Styrol-Copolymerisate, Polyetherimide, Polyethersulfone, Polyetherketone und üblichen Zusatzstoffen sowie die Verwendung der Mischung zur Herstellung von Formteilen.

EP 0 308 803 A2

# Stabilisierte, aromatische Polyetherketone enthaltende Mischung und deren Verwendung zur Herstellung von Formteilen

Die Erfindung betrifft eine thermoplastische Mischung bestehend aus mindestens einem aromatischen Polyetherketon, mindestens einer Phosphorverbindung und gegebenenfalls mindestens einem weiteren Polymerisat aus der Gruppe der Polycarbonate, Polyester, Acrylnitril/Butadien/Styrol-Copolymerisate, Polyetherimide, Polyethersulfone, Polyetherketone und üblichen Zusatzstoffen sowie die Verwendung der Mischung zur Herstellung von Formteilen.

Die Klasse der aromatischen Polyetherketone sind aus der Literatur bekannt (US-PS 4,108,837, US-PS 3,332,909). Sie stellen hochschmelzende und hochtemperaturstabile thermoplastische Polymere dar, die in thermisch stark beanspruchten Funktionsteilen eingesetzt werden. Die Verarbeitung der Polyetherketone erfolgt bei Temperaturen oberhalb der Schmelztemperatur, im allgemeinen bei 350 -450 °C. Aufgrund der hohen Temperaturen ist eine Konstanz der Viskosität für eine gleichmäßige Verarbeitung notwendig.

Es ist bekannt, zur Stabilisierung von Polyetherketonen mit wiederkehrenden Einheiten der allgemeinen Formel -Ar-CO-Phosphorverbindungen einzusetzen, wobei Ar ein divalentes aromatisches Radikal darstellt, das zumindest teilweise über Ethergruppierungen verknüpft ist (GB 1 446 962). Die angegebenen Beispiele zeigen jedoch, daß die Viskosität innerhalb einer Stunde stark schwankt, was vor allem bei der Spritzgußverarbeitung zu Problemen führt. Wünschenwert wäre eine Konstanz der Viskosität während der Verarbeitungszeit, so daß Maschinenparameter nicht geändert werden müssen.

Aufgabe der vorliegenden Erfindung ist es, zum einen Stabilisatoren für aromatische Polyetherketone enthaltende Massen zu finden, die Nebenreaktionen unterdrücken, welche zu Viskositätsveränderungen bei erhöhten Temperaturen während der Verarbeitung führen und zum anderen das System Polyetherketon/Stabilisator zu optimieren.

Die geschilderten Nachteile lassen sich fast gänzlich ausschalten durch eine thermoplastische Mischung bestehend aus

(a) mindestens einem aromatischen Polyetherketon, das zu mindestens 70 Gew.-% die wiederkehrende Einheit

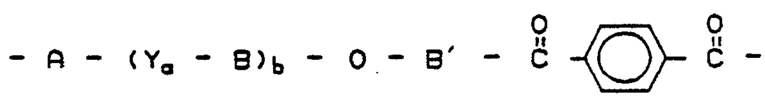

(I)

und 0 bis 30 Gew.-% weitere Polymereinheiten, wobei die Summe stets 100 Gew.-% ist, enthält, wobei A, B und B′ gleiche oder verschiedene zweiwertige aromatische Reste mit 6 bis 12 C-Atomen darstellen, Y ein zweiwertiger Rest aus der Gruppe -O-, -S-, -SO-, $-SO_2-$, -CO, $CH_2-$, $-C(CH_3)_2$ ist, und a und b unabhängig voneinander 0 oder 1 sind,

(b) mindestens einer Phosphorverbindung der allgemeinen Formel

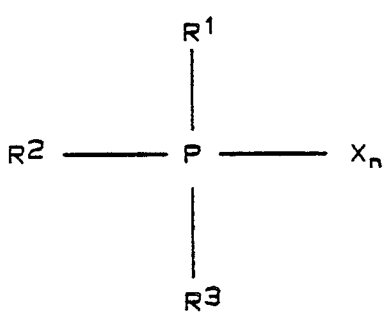

(II)

wobei $R^1$, $R^2$ und $R^3$ gleiche oder verschiedene einwertige Reste mit 1 bis 50 C-Atomen, oder solche Reste sind, die zusätzlich Heteroatome oder ionisch gebundene Gruppen oder Atome enthalten, X Schwefel oder Sauerstoff und n die Zahl 0 oder 1 bedeuten,

(c) gegebenenfalls mindestens einem weiteren Polymerisat aus der Gruppe der Polycarbonate, Polyester, Acylnitril/Butadien/Styrol-Copolymerisate, Polyetherimide, Polyethersulfone, Polyetherketone und

(d) gegebenenfalls üblichen Zusatzstoffen.

Durch diese Maßnahme wird bewirkt, daß sich die normalerweise auftretende Veränderung der Schmelzviskosität der Polymeren bei hoher Temperatur so stark vermindert, daß eine Verarbeitung der Polymeren mit Hilfe der üblichen Methoden auch unter ungünstigen Bedingungen problemlos möglich wird. Hierbei hat sich herausgestellt, daß sich bei einer Mischung von Phosphorverbindungen ein synergistischer Effekt hinsichtlich der Wirksamkeit ergibt.

Die in den erfindungsgemäßen Mischungen eingesetzten Polyetherketone werden in bekannter Weise z.B. durch Polykondensation aus aromatischen Dihydroxyverbindungen und - durch elektronegative Gruppen aktivierte -Dihalogenverbindungen hergestellt (GB-PS 1 559 709, EP-B-0 000 361, EP-A-O 152 161, DE-PS 2 220 079 und EP-A-0 195 448). Ein bevorzugtes Polyetherketon hat die wiederkehrende Einheit in Formel (I), in der A, B und B′ gleich Phenylen, vorzugsweise p-Phenylen, a und b gleich 1 und Y gleich -0- ist.

Neben den Dihydroxyverbindungen und den Dihalogenverbindungen, die zur Herstellung der Polyetherketone verwendet werden, können gegebenenfalls auch zusätzlich Diphenole und/oder weitere Dihalogenverbindungen bei der Polykondensation zugesetzt werden. Auf diese Weise ist es möglich, den gewünschten Gehalt an wiederkehrenden Einheiten der Formel (I) bei den Polyetherketonen einzustellen.

Dies sind Diphenole der Formel

$HO\text{-}L\text{-}(M_d\text{-}N)_e\text{-}OH$   (III)

in der d und e gleich oder verschieden sein können und die Werte 0 oder 1 annehmen. L und N sind gleiche oder verschiedene zweiwertige aromatische Reste mit 6-12 C-Atomen wie Naphthylen, Diphenylen, vorzugsweise Phenylen, insbesondere m- und p-Phenylen, die aber auch mit $C_1$-$C_4$-Alkyl substituiert sein können. M ist eine einfache Bindung oder ein zweiwertiger Rest und bedeutet O, S, SO, $SO_2$, CO, $CH_2$ oder $C(CT_3)_2$, wobei T Wasserstoff oder Halogen, vorzugsweise Fluor ist.

Beispiele für derartige Diphenole sind Hydrochinon, 2-Phenylhydrochinon, Resorcin, 2,2-Bis(4-hydroxyphenyl)propan (Bisphenol A), 4,4′-Dihydroxydiphenyl, 4,4′-Dihydroxy-diphenylsulfon, 4,4′-Dihydroxy-benzophenon, 2,2-Bis-(4-hydroxyphenyl)-1,1,1,3,3,3-hexafluorpropan und Bis-(4-hydroxyphenyl)ether.

Beispiele für einzusetzende Dihalogenverbindungen sind Verbindungen der allgemeinen Formel

$X^1\text{-}D\text{-}(Z\text{-}E)_c\text{-}K\text{-}G\text{-}X^2$   (IV)

$X^1$ und $X^2$ sind verschieden oder vorzugsweise gleich und stellen Halogen dar, vorzugsweise Chlor und Fluor. D, E und G sind unabhängig voneinander zweiwertige aromatische Reste mit 6-12 C-Atomen wie Phenylen, Naphthylen, Diphenylen, vorzugsweise Phenylen, die aber auch mit $C_1$-$C_4$-Alkyl substituiert sein können. D und G sind stets o- oder p-verknüpft, E kann außerdem auch m-verknüpft sein. Z und K sind -CO- oder -$SO_2$ und c ist 1 oder 2.

Bevorzugte Dihalogenverbindungen sind beispielsweise 1-(4-Fluorbenzoyl)-4-(2-fluorbenzoyl)-benzol, 1,4-(bis-(4-Fluorbenzoyl)-benzol, 1-(4-Chlorbenzoyl)-4-(2-Chlorbenzoyl)-benzol, 1,4-Bis-(4-Chlorbenzoyl)-benzol.

Das Molverhältnis von Diphenolen zu den Dihalogenverbindungen beträgt im allgemeinen 0,95 bis 1,05 : 1,05 bis 0,95.

Zur Blockierung von Endgruppen können bei der Polykondensation Monophenole wie Phenol ($C_6H_5OH$), p-Phenylphenol sowie Monohalogenverbindungen wie 4-Fluorbenzophenon, 4-Chlor- oder 4-Fluordiphenylsulfon verwendet werden.

Die in den erfindungsgemäßen Mischungen eingesetzten Polyetherketone weisen Molekulargewichte (Zahlenmittel) von 5000 to 200000, vorzugsweise von 10000 bis 100000 auf.

Eine weitere Möglichkeit zur Herstellung von Polyetherketonen der Formel (I) besteht in der Friedel-Crafts-Reaktion von Diacylhalogeniden mit aromatischen Verbindungen mit mindestens zwei Wasserstoffatomen in Gegenwart eines Katalysators. (DE-OS 16 45 153, US-PS 3,953,400 und US-PS 3,956,240)

Typische Ausgangsmaterialien für die Herstellung der Polyetherketone mittels Friedel-Crafts-Acylierung sind Terephthaloylchlorid oder Phosgen und Diphenylether, gegebenenfalls Diphenoxybiphenyl, Diphenoxybenzol oder p-Phenoxy-benzoylchlorid. Auch nach diesem Verfahren hergestellte Polyetherketone können mit entsprechenden Verbindungen modifiziert werden, um den gewünschten Anteil an wiederkehrenden Einheiten der Formel (I) zu erreichen.

Die Polyetherketone bestehen im allgemeinen zu mindestens 70, vorzugsweise zu 80 bis 100 und insbesondere 90 bis 100 Gew.-% aus wiederkehrenden Einheiten der Formel (I) und 0 bis 30 Gew.-% an

weiteren Polymereinheiten, wobei die Summe stets 100 Gew.-% ist.

In den Phosphorverbindungen b) der allgemeinen Formel (II) sind $R^1$, $R^2$, $R^3$ gleiche oder verschiedene einwertige Reste mit 1-50, vorzugsweise 2-18 C-Atomen. Sie können auch Heteroatome enthalten, insbesondere Sauerstoff, Phosphor und Stickstoff. Auch ionisch gebundene Gruppen oder Atome wie Erdalkalimetalle (insbesondere Ca) können Bestandteil dieser Gruppen sein. Vorzugsweise sind die Reste substituierte oder unsubstituierte aromatische Reste wie Phenyl-, 2,4-Di-tert.butyl-phenyl- oder 4-Hydroxy-3,5-di-tert.butyl-benzyl-reste oder Reste der Formeln

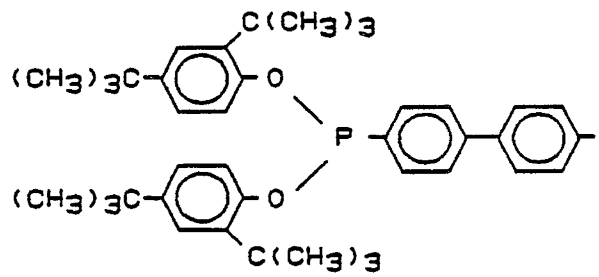

oder

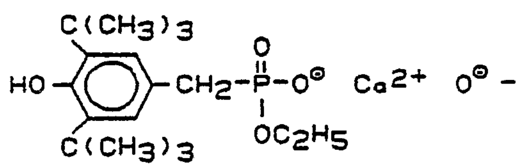

Ferner können die Reste die Formel -OR besitzen. R sind z.B. Alkylreste wie die Ethylgruppe oder substituierte oder unsubstituierte aromatische Reste z.B. Phenyl-, 2,4-Di-tert-butyl-phenyl- oder Nonylphenyl-reste.

Phosphorverbindungen, die allein oder als Gemisch in den erfindungsgemäßen Mischungen eingesetzt werden, sind beispielsweise Triphenylphosphat sowie mit $C_1$-$C_4$-Alkylgruppen substituierte Phenylphosphate wie Trikresylphosphat, Triphenylphosphit, substituierte Triphenylphosphite wie Tri-(nonylphenyl)-phosphit, Tri-(2,4-di-tert.butyl-phenyl)-phosphit sowie Verbindungen der Formeln

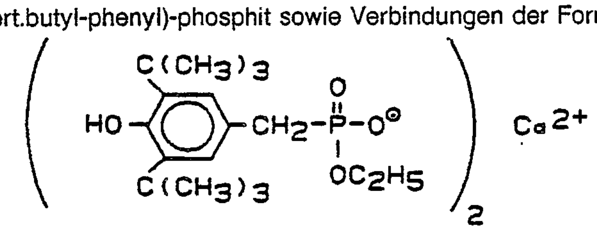

,

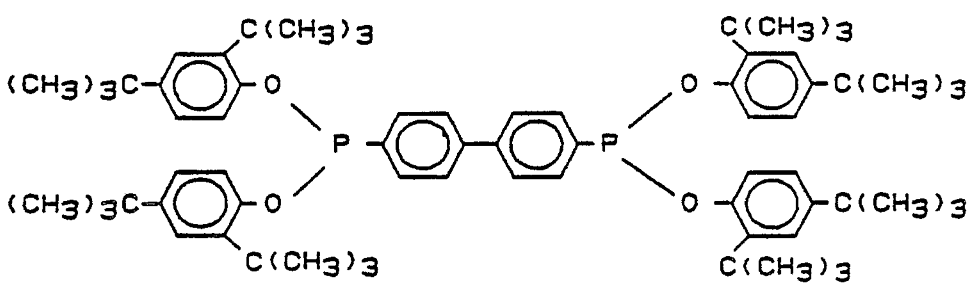

Vorzugsweise werden mindestens 2, insbesondere 2 bis 5 Phosphorverbindungen im Gemisch eingesetzt.

Die Summe der erfindungsgemäß eingesetzten Phosphorverbindungen beträgt im allgemeinen 0,01-5, vorzugsweise 0,05-2, besonders bevorzugt 0,1-1 Gew.-%, bezogen auf die Komponente (a).

Die Phosphorverbindungen werden den Polyetherketonen zugemischt, und die Mischungen mit Hilfe

geeigneter Geräte wie Knetern, Extrudern oder Walzen oberhalb der Schmelztemperaturen der Produkte, im allgemeinen bei etwa 370-450 °C homogenisiert. Es ist jedoch auch möglich, die Phosphorverbindungen mit Hilfe der genannten Geräte in bereits geschmolzene Polyetherketone einzuarbeiten. Anschließend läßt man die Schmelze erkalten und zerkleinert die Produkte, die dann gebrauchsfertig sind.

Gegebenenfalls können die erfindungsgemäßen Mischungen weitere Polymerisate c) aus der Gruppe der Polycarbonate, Polyester, Acrylnitril/Butadien/Styrol-Copolymeren, Polyimide, Polyesterimide und Polyethersulfone enthalten. Diese Polymerisate, auch Mischungen mit Polyetherketonen, sind in der Literatur bekannt, (US 3,365,517; US 3,636,140; EP 211 604).

Die aromatischen Polyetherketone und die zusätzlich zugemischten Polymerisate können in jedem Gewichtsverhältnis in den erfindungsgemäßen Mischungen zugegen sein. Bevorzugte Mischungsverhältnisse sind 10:1 bis 1:5 Gewichtsteile Polyetherketon : weiteres Polymerisat.

Bei dem Mischprozeß können gleichzeitig übliche Zusätze d) wie Schmiermittel, flammhemmende Mittel, Antihaftmittel, Antistatika, Weichmacher, Füllstoffe, Pigmente und verstärkende Fasern (Glas-, Kohlefasern) in üblichen Mengen in die Polyetherketone eingearbeitet werden.

Die erfindungsgemäßen Mischungen weisen eine verbesserte Stabilität bei hohen Temperaturen auf. Sie können mit Hilfe der üblichen Thermoplast-Verarbeitungsmethoden in Formteile wie Rohre, Kabelummantelungen, Platinen und diverse technische Funktionsteile verarbeitet werden.

In den Beispielen ist % stets Gew.-%.

## Beispiele

Der Schmelzindex wird nach DIN 53 735 bei 400 °C unter einer Last von 5 kp gemessen, wobei der Anfangswert direkt nach 5 Minuten nach dem Einbringen der Probe in die Schmelze und der 30 min-Wert 30 Minuten nach dem Einbringen der Probe bestimmt wird. Als Stabilität wird das Hundertfache des Verhältnisses des 30 min-Wertes zum 5 min-Wert angegeben und als Maß für die Veränderung der Schmelzviskosität des Produkts unter Einwirkung der hohen Temperatur angesehen. Ändert sich die Schmelzviskosität nicht, so ergibt sich die Stabilität 100.

1. 7,708 kg Hydrochinon, 15,3 kg Natriumhydrogencarbonat und 70 kg Diphenylsulfon wurden in einen Rührkessel gegeben. Die Luft wurde durch Stickstoff verdrängt und die Mischung auf 140 °C erhitzt. Anschließend wurde bei 140-150°C gerührt und nach dem Nachlassen der Gasentwicklung auf 210 °C erhitzt. 22,45 kg 1,4-Bis-(4-fluorbenzoyl)-benzol (BFB) wurden zugefügt. Innerhalb einer Stunde wurde die Temperatur auf 310 °C erhöht. Nach weiteren 20 Minuten wurde die Reaktionsmischung abgekühlt, zerkleinert und zur Entfernung von Salzen und Diphenylsulfon wechselweise mit Wasser und Schwefelsäure und mit Aceton gewaschen. Das Polymerpulver wurde im Trockenschrank bei 120 °C/100 mbar getrocknet.

2-4, Vergleich 1) Das erhaltende Polymerpulver wurde erfindungsgemäß mit Phosphorverbindungen der Formel (II) unter Zugabe von jeweils 0,1 % Polytetrafluorethylen (PTFE) als Schmiermittel gemischt und bei 400 °C extrudiert. Vergleichsbeispiel 1 enthielt keine Phosphorverbindung sondern nur Schmiermittel. Die folgende Tabelle 1 zeigt ferner den Schmelzindex MFI und die Stabilität der Mischungen an.

Tabelle 1

| Beispiel | Zusatz | MFI | | Stabilität |
|---|---|---|---|---|
| | | 5 min | 30 min | |
| | | [g/10 min] | | |
| 2 | 0,1 % PTFE + 0,25 % Triphenylphosphit | 26 | 6,5 | 25 |
| 3 | 0,1 % PTFE + 0,25 % Triphenylphosphat | 21 | 6,9 | 33 |
| 4 | 0,1 % PTFE + 0,125 % Triphenylphosphit + 0,125 % Triphenylphosphat | 24 | 19 | 79 |
| Vergleich 1 | 0,1 % PTFE | 20 | 3,4 | 17 |

5) 19,22 kg BFB, 8,26 kg Soda und 55,5 kg Diphenylsulfon wurden in einen Rührkessel gegeben. Nach Ersatz der Luft durch Stickstoff wurde unter Rühren auf 220 °C erhitzt. Im Laufe von 4 Std. wurden 6,873 kg Hydrochinon zugefügt, gleichzeitig wurde auf 310 °C erhitzt. Diese Temperatur ist nach 45 min erreicht worden und wurde konstant gehalten. Nach 4 Std. wurden noch 0,25 kg BFB zugefügt. Nach weiteren 15 min wurde die Reaktionsmischung abgekühlt und wie im Beispiel 1 aufgearbeitet.

6-8, Vergleich 2) Aus dem Polymerpulver des Beispiels 5 wurden, wie bei Beispiel 2 beschrieben, folgende Mischungen hergestellt.

| Beispiel-Nr. | Zusatz |
|---|---|
| 6 | 0,1 % PTFE +<br>0,2 % Tri-(2,4-di-tert.butyl-phenyl)-phosphit |
| 7 | 0,1 % PTFE +<br>0,2 % Phosphonit der Formel |

| Beispiel-Nr. | Zusatz |
|---|---|

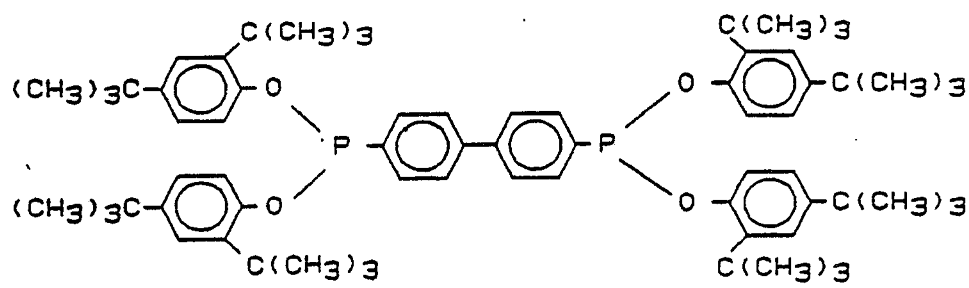

| | |
|---|---|
| 8 | 0,1 % PTFE +<br>0,5 % Phosphorverbindung der Formel |

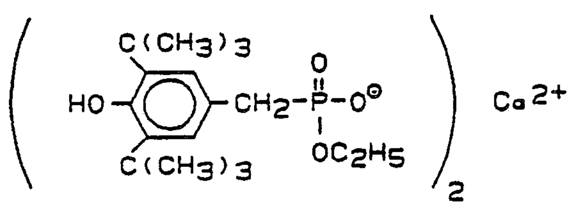 ,

| | |
|---|---|
| Vergleich 2 | 0,1 % PTFE |

Die folgende Tabelle 2 zeigt die an diesen Mischungen gemessenen Werte:

Tabelle 2

| Beispiel-Nr. | MFI | | Stabilität |
|---|---|---|---|
| | 5 min | 30 min | |
| | [g/10 min] | | |
| 6 | 24 | 17,5 | 73 |
| 7 | 22 | 15 | 68 |
| 8 | 23 | 19,3 | 84 |
| Vergleich 2 | 22 | 10,6 | 48 |

9), Vergleich 3) Das Polymere aus Beispiel 5 wurde versetzt mit 0,1 % PTFE, 0,1 % Triphenylphosphat und 0,1 % Tri-(2,4-di-tert.butyl-phenyl)-phosphit und in einer handelsüblichen Spritzgußmaschine verarbeitet. Als Maß für die Stabilität des Produktes wurde die Fließweglänge in Abhängigkeit der Verweilzeit gemessen. Als Vergleich 3 dient die Mischung ohne die Phosphorverbindungen. Die erhaltenen Werte sind in der Tabelle 3 angeführt.

Tabelle 3

| Fließlänge in cm in Abhängigkeit von der Verweilzeit (in min) | | | | | | |
|---|---|---|---|---|---|---|
| | 0 | 5 | 15 | 30 | 60 | [min] |
| Beispiel 9 | 23 | 23 | 23 | 22,5 | 22,5 | [cm] |
| Vergleich 3 (nicht-stabilisiert) | 18 | 16 | 13 | 11 | 10 | [cm] |

Aus der Tabelle ist zu entnehmen, daß die von der Viskosität abhängige Fließlänge der erfindungsgemäßen Mischung über die Verweilzeit von 60 Minuten praktisch konstant ist ( minus 2 %), während die Fließlänge, in der sich eine Veränderung der Viskosität ausdrückt, einer nicht stabilisierten Probe in diesem Zeitraum um ca. 45 % abnimmt.

## Ansprüche

1. Thermoplastische Mischung bestehend aus

(a) mindestens einem aromatischen Polyetherketon, das zu mindestens 70 Gew.-% die wiederkehrende Einheit

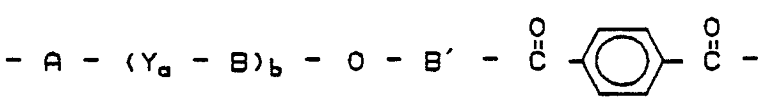

(I)

und 0 bis 30 Gew.-% weitere Polymereinheiten, wobei die Summe stets 100 Gew.-% ist, enthält, wobei A, B und B′ gleiche oder verschiedene zweiwertige aromatische Reste mit 6 bis 12 C-Atomen darstellen, Y ein zweiwertiger Rest aus der Gruppe -O-, -S-, -SO, $-SO_2-$, -CO, $CH_2-$, $-C(CH_3)_2$ ist, und a und b unabhängig voneinander 0 oder 1 sind,

(b) mindestens einer Phosphorverbindung der allgemeinen Formel

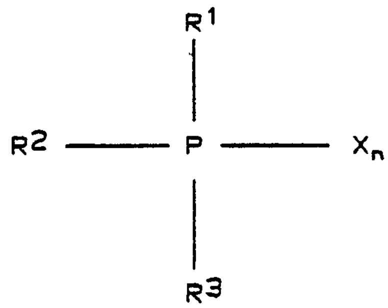

(II)

wobei $R^1$, $R^2$ und $R^3$ gleiche oder verschiedene einwertige Reste mit 1 bis 50 C-Atomen, oder solche Reste sind, die zusätzlich Heteroatome oder ionisch gebundene Gruppen oder Atome enthalten, X Schwefel oder Sauerstoff und n die Zahl 0 oder 1 bedeuten,

(c) gegebenenfalls mindestens einem weiteren Polymerisat aus der Gruppe der Polycarbonate, Polyester, Acylnitril/Butadien/Styrol-Copolymerisate, Polyetherimide, Polyethersulfone, Polyetherketone und

(d) gegebenenfalls üblichen Zusatzstoffen.

2. Mischung nach Anspruch 1, dadurch gekennzeichnet, daß die Polyetherketone zu 80 bis 100 Gew.-%, insbesondere zu 90 bis 100 Gew.-% die wiederkehrende Einheit (I) enthalten.

3. Mischung nach Anspruch 1 oder 2, dadurch gekennzeichnet, daß in dem Polyetherketon die wiederkehrende Einheit die Formel (I) hat, in der A, B und B′ gleich Phenylen, vorzugsweise p-Phenylen, a und b gleich 1 und Y gleich -0-ist

4. Mischung nach einem oder mehreren der Ansprüche 1 bis 3, dadurch gekennzeichnet, daß die weiteren Polymereinheiten von Diphenolen der allgemeinen Formel

$HO\text{-}L\text{-}(M_d\text{-}N)_e\text{-}OH$ (III)

abgeleitet sind, in der d und e gleich oder verschieden sind und die Werte 0 oder 1 annehmen, L und N gleiche oder verschiedene zweiwertige aromatische Reste mit 6 - 12 C-Atomen sind, die gegebenenfalls mit $C_1$-$C_4$-Alkyl substituiert sind, M ist eine einfache Bindung oder ein zweiwertiger Rest aus der Gruppe O, S, SO, $SO_2$, CO, $CH_2$ oder $C(CT_3)_2$ ist, wobei T Wasserstoff oder Halogen, vorzugsweise Fluor ist, und/oder von Dihalogenverbindungen der allgemeinen Formel

$X^1\text{-}D\text{-}(Z\text{-}E)_c\text{-}K\text{-}G\text{-}X^2$ (IV)

abgeleitet sind, bei der $X^1$, $X^2$ gleich oder verschieden sind und Halogen, D, E und G gleich oder verschieden sind und zweiwertige aromatische Reste mit 6 - 12 C-Atomen, von denen D und G stets o- oder p-verknüpft sind, Z und K die -CO- oder -$SO_2$-Gruppe und c die Zahl 1 oder 2, jeweils unabhängig voneinander, bedeuten.

5. Mischung nach Anspruch 4, dadurch gekennzeichnet, daß $X^1$, $X^2$ unabhängig voneinander Chlor oder Fluor sind.

6. Mischung nach Anspruch 4 oder 5, dadurch gekennzeichnet, daß die Diphenole Hydrochinon, Resorcin, Bisphenol A, 4,4′-Dihydroxydiphenyl, 4,4′-Dihydroxy-diphenylsulfon oder 4,4′-Dihydroxybenzophenon und die Dihalogenverbindungen 4,4′-Difluorbenzophenon, 4,4′-Dichlordiphenylsulfon, 4,4′-Difluordiphenylsulfon, 1,4-Bis-(4-Fluorbenzoyl)-benzol oder 1-(4-Fluorbenzoyl)-4-(2-fluorbenzoyl)benzol sind.

7. Mischung nach einem oder mehreren der Ansprüche 1 bis 6, dadurch gekennzeichnet, daß in Komponente b) X Sauerstoff ist.

8. Mischung nach einem oder mehreren der Ansprüche 1 bis 7, dadurch gekennzeichnet, daß die Reste $R^1$, $R^2$, $R^3$ 2-18 C-Atome aufweisen.

9. Mischung nach einem oder mehreren der Ansprüche 1 bis 8, dadurch gekennzeichnet, daß in Komponente b) ein Teil oder alle Reste $R^1$, $R^2$, $R^3$ als Heteroatome Sauerstoff und/oder Phosphor enthalten.

10. Mischung nach einem oder mehreren der Ansprüche 1 bis 9, dadurch gekennzeichnet, daß mindestens zwei der Reste $R^1$, $R^2$, $R^3$ jeder Phosphorverbindung substituierte oder unsubstituierte aromatische Reste sind und/oder die Struktur -OR aufweisen.

11. Mischung nach Anspruch 10, dadurch gekennzeichnet, daß die Reste -OR Phenoxy-, 2,4-Di-tert.butyl-phenoxy-, Nonylphenoxy- oder Äthoxy-Reste sind.

12. Mischung nach einem oder mehreren der Ansprüche 1 bis 11, dadurch gekennzeichnet, daß als Phosphorverbindung mindestens eine, vorzugsweise mindestens zwei Verbindungen aus der Gruppe bestehend aus Triphenylphosphat, Triphenylphosphit, Tri-(2,4-di-tert-butyl-phenyl)-phosphit oder Verbindungen der Formeln

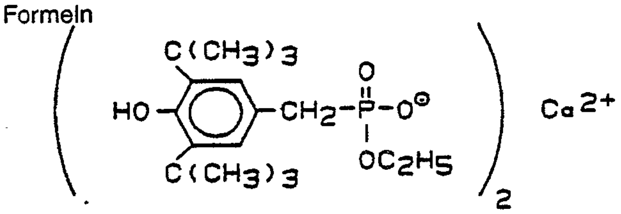

,

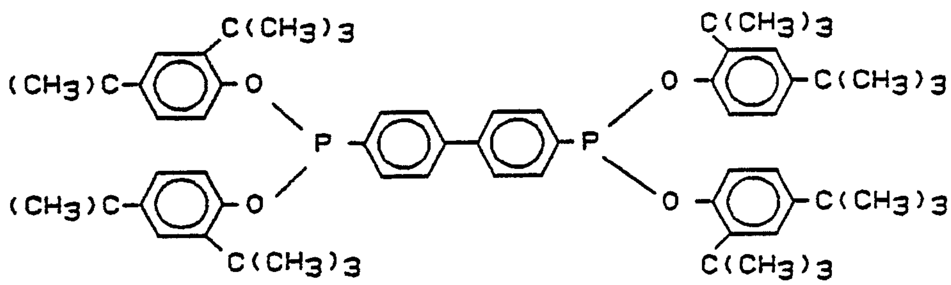

eingesetzt wird (werden).

13. Mischung nach einem oder mehreren der Ansprüche 1 bis 12, dadurch gekennzeichnet, daß die Summe der Phosphorverbindungen b) 0,01-5, vorzugsweise 0,05-2 und insbesondere 0,1-1 Gew.-%, bezogen auf Komponente a), beträgt.

14. Verwendung der Mischungen gemäß einem oder mehreren der Ansprüche 1 bis 13 zur Herstellung von Formteilen.

15. Verwendung nach Anspruch 14 als Rohre, Kabelummantelungen, Platinen und technische Funktionsteile.